# EUROPEAN PATENT SPECIFICATION

(11) **EP 1 488 946 B1**
(45) Date of publication and mention of the grant of the patent: **24.05.2006**
(21) Application number: 04014265.5
(22) Date of filing: 17.06.2004
(51) Int. Cl.: B60K 5/12, B60K 17/08, B60K 5/04

(54) **Mounting device for vehicular power plant**
Befestigungsvorrichtung für einen Fahrzeugmotor
Dispositif de fixation pour le moteur d'un véhicule

(30) Priority: 20.06.2003 JP 2003176718
(43) Date of publication of application: 22.12.2004
(73) Proprietor: HONDA MOTOR CO., Ltd., Tokyo (JP)
(72) Inventor: Igami, Hajime, Wako-shi Saitama (JP); Asakawa, Kunihiro, Wako-shi Saitama (JP)
(74) Representative: Herzog, Markus

(56) References cited:
- EP-A- 0 297 226
- EP-A- 0 332 861
- EP-A- 1 359 040
- DE-A1- 4 009 995

## Description

### Background of the invention

The present invention relates to an improvement of a mounting device for mounting, on a vehicle body frame, a power plant including an engine and a transmission which is coupled to the engine at its one end along an axis of a crank shaft provided in the engine.

Conventionally, there is known in EP 0 297 226 A, which corresponds to JP-2562485 B2, a mounting device of a torque rod system in which a power plant including an engine, and a transmission coupled to the engine at one end thereof along an axis of a crankshaft provided in the engine, a main mount on an engine side and a main mount on a transmission side which are arranged substantially on an inertial main axis of the power plant respectively including first elastic members, the main mount holding the power plant on a vehicle body frame, and a pair of upper and lower torque rods (38, 47) including second elastic members, the upper and lower torque rods being provided between the power plant and the vehicle body frame above and below drive shafts which are extended from the transmission, wherein the upper torque rod and the lower torque rod have an axis of rotation parallel to the crankshaft, respectively.

In the mounting device of the torque rod system as described above, because spring characteristic of the torque rods does not affect in a vertical direction, the spring characteristic cannot be performed both in the vertical direction and in a rolling direction, and freeness of tuning is enhanced. However, in the above described conventional device, the pair of the upper and lower torque rods are arranged substantially horizontally in a plane perpendicular to the axis of the crank shaft, and so, displacement of the power plant around an oscillation center is insufficiently restrained. For this reason, a feii of quake and a feel of bump at a time of starting or stopping the engine are serious, and further, noises have increased at a time of acceleration or deceleration.

EP 1 359 040 A as prior art under Article 54(3) EPC discloses a mounting device for a vehicular power plant comprising a power plant including an engine and a transmission coupled to the engine at one end thereof along an axis of a crankshaft provided in the engine, a main mount on an engine side and a main mount on a transmission side which are arranged substantially on an inertial main axis of the power plant respectively including: first elastic members, the main mount holding the power plant on a vehicle body frame, and a pair of upper and lower torque rods including second elastic members, the upper and lower torque rods being provided between the power plant and the vehicle body frame above and below drive shafts which are extended from the transmission, wherein the upper torque rod and the lower torque rod have an axis of rotation parallel to the crankshaft, respectively.

### Summary of the invention

The invention is made in view of the above described circumstances, and it is an object of the invention to provide a mounting device for a vehicular power plant in which a displacement around an oscillation center can be sufficiently restrained.

In order to attain the above described object, there is provided, according to the invention, a mounting device for a vehicular power plant comprising a power plant including an engine, and a transmission coupled to the engine at one end thereof along an axis of a crankshaft provided in the engine, a main mount on an engine side and a main mount on a transmission side which are arranged substantially on an inertial main axis of the power plant respectively including first elastic members, the main mount holding the power plant on a vehicle body frame, and a pair of upper and lower torque rods including second elastic members, the upper and lower torque rods being provided between the power plant and the vehicle body frame above and below drive shafts which are extended from the transmission, wherein an oscillation center of the power plant following torque variation of the power plant is determined at least by a common elastic center of both main mounts on the engine side and on the transmission side and by positions of the drive shafts, and an angle which is formed by one torque rod of the two torque rods which is arranged more remote from the oscillation center with respect to a straight line which interconnects a connecting point of the one torque rod on a power plant side and the oscillation center, on a plane perpendicular to the axis of the crankshaft in a projected view is set substantially at a right angle, wherein the upper torque rod has a substantial vertical axis of rotation and the lower torque rod has an axis of rotation parallel to the crankshaft.

Usually, when the power plant oscillates around the oscillation center, the power plant is likely to be displaced more significantly at the side of one of the torque rods which is arranged more remote from the oscillation center. However, according to the above described structure, the one torque rod is arranged so as to intersect the straight line which interconnects the connecting point of the one torque rod on the power plant side and the oscillation center, substantially at a right angle, on the plane perpendicular to the axis of the crank shaft in a projected view. Therefore, it will be possible to effectively restrain the power plant from being displaced at the side of the one torque rod thereby to sufficiently restrict the displacement of the power plant, enabling a mode of displacement to be effectively controlled. In this manner, a feel of quake and a feel of bump at the time of starting or stopping the engine can be reduced, and it will be possible to contribute to decrease in noises at the time of acceleration or deceleration.

### BRIEF DESCRIPTION OF THE DRAWINGS

Fig. 1 is a plan view partly cut away showing a power plant in a state mounted on a vehicle.
Fig. 2 is a side elevation view as seen in a direction of an arrow mark 2 in Fig. 1.
Fig. 3 is a side elevation view as seen in a direction of an arrow mark 3 in Fig. 1.
Fig. 4 is a vertical sectional view of a main mount on an engine side.
Fig. 5 is a schematic view showing a mounting device which is projected on a plane perpendicular to an axis of a crank shaft.
Fig. 6 is a graph showing vibration characteristic in a vertical direction acting on a vehicle body frame.

### DETAILED DESCRIPTION OF THE PREFERED EMBODIMENTS

Now, a mode for carrying out the invention will be described referring to an embodiment of the invention which is shown in the attached drawings.

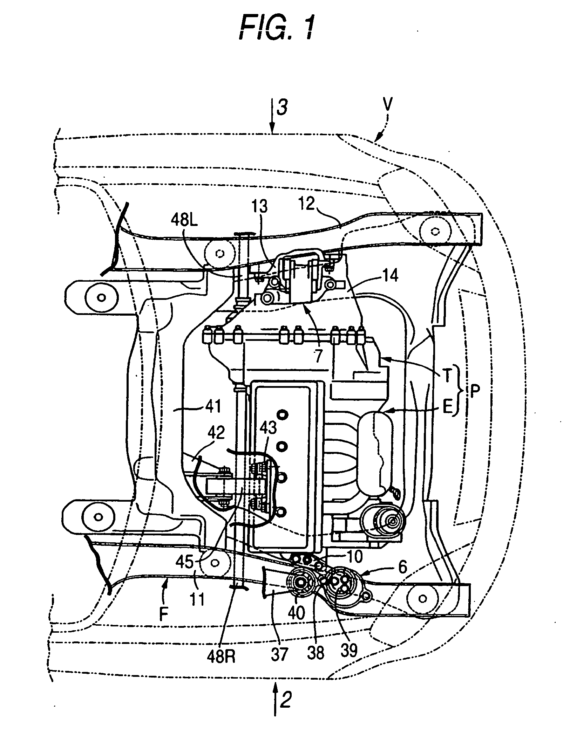

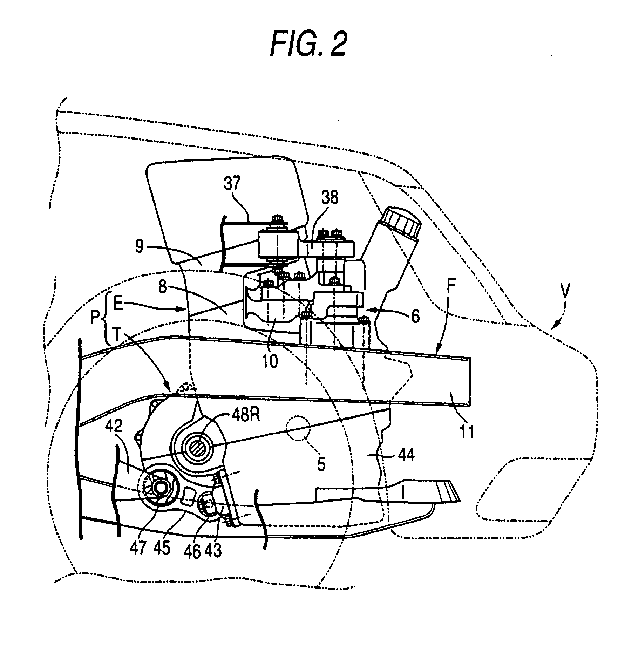

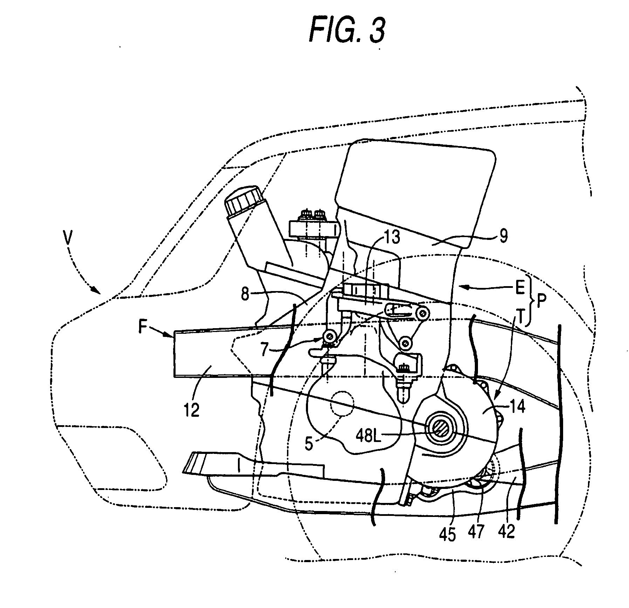

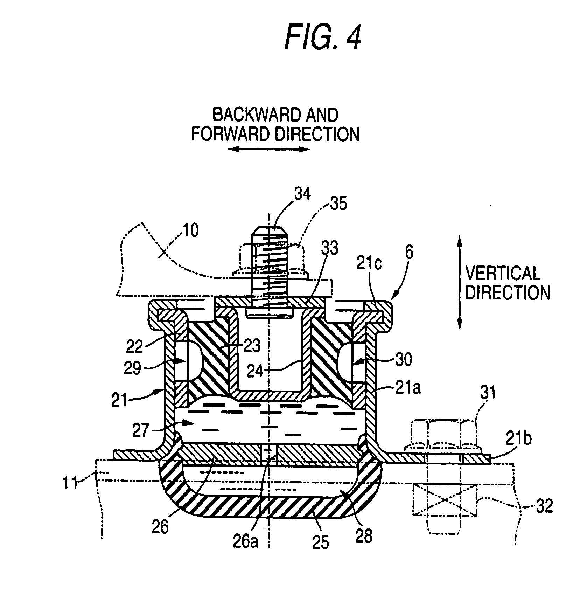

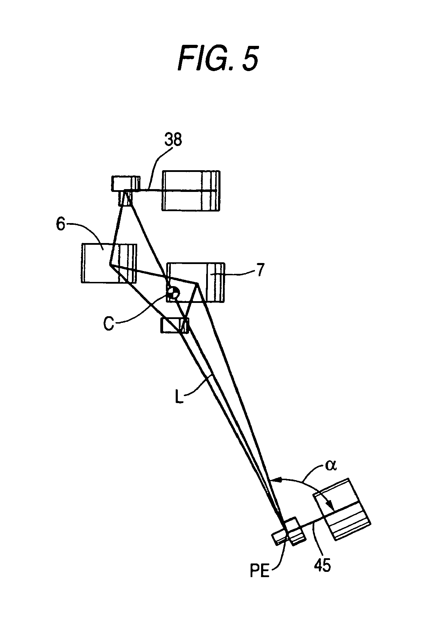

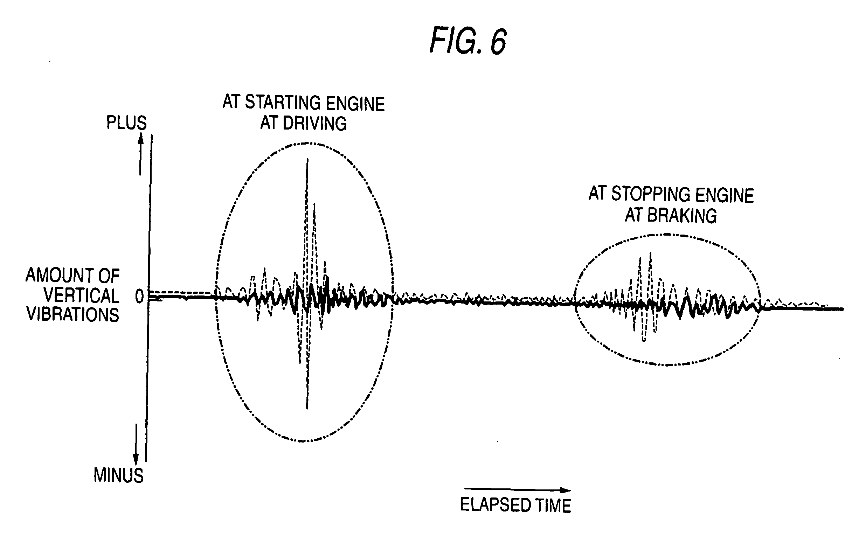

Figs. 1 to 6 show an embodiment of the invention. Fig. 1 is a plan view partly cut away showing a power plant in a state mounted on a vehicle, Fig. 2 is a side elevation view as seen in a direction of an arrow mark 2 in Fig. 1, Fig. 3 is a side elevation view as seen in a direction of an arrow mark 3 in Fig. 1, Fig. 4 is a vertical sectional view of a main mount on an engine side, Fig. 5 is a schematic view showing a mounting device which is projected on a plane perpendicular to an axis of a crank shaft, and Fig. 6 is a graph showing vibration characteristic acting on a vehicle body frame in a vertical direction.

Referring first to Figs. 1 to 3, P is a power plant which is mounted on a vehicle V of a front engine and front drive (FF) type. The power plant P includes an engine E which is laterally arranged with a crank shaft 5 extended along a lateral direction of the vehicle V, and a transmission T which is coupled to the engine E at its one end along the axis of the above described crank shaft 5.

The power plant P is held on the vehicle body frame F by means of a main mount 6 on an engine side and a main mount 7 on a transmission side which are arranged substantially on an inertial main axis thereof. More specifically, a bracket 10 is attached to a cylinder block 8 and a cylinder head 9 of the engine E at the other end along the axis of the crank shaft 5, and the main mount 6 on the engine side is interposed between a right hand front side frame 11 of the vehicle body frame F and the above described bracket 10. On the other hand, a bracket 13 is attached to a left hand front side frame 12 of the vehicle body frame F, and the main mount 7 on the transmission side is interposed between a transmission case 14 of the transmission T and the above described bracket 13.

In Fig. 4, the main mount 6 on the engine side includes a casing 21 having a cylindrical main casing part 21a and a flange part 21b which is projected radially outwardly from a lower end of the main casing part 21a. Moreover, an outer case 22 in a substantially tubular shape which is fitted to an inner face of the above mentioned main casing part 21a is fixed to the casing 21 at a calking portion 21c which is formed at an upper end of the main casing part 21a. An elastic member 23 is fixed by sintering to an inner peripheral wall of the outer case 22, and an inner case 24 in a cup-like shape is fixed by sintering to an inner peripheral wall of this elastic member 23. In addition, an elastic member 25 in a cup-like shape is fixed by sintering to a lower end of the main casing part 21a, and a partition wall 26 is fixed by sintering to an upper edge of the elastic member 25.

A first liquid chamber 27 is formed between the partition wall 26 and the elastic member 23, and a second liquid chamber 28 is formed between the partition wall 26 and the elastic member 25. The first and second liquid chambers 27, 28 communicate with each other by way of an orifice 26a which is formed in the partition wall 26.

In addition, a third and fourth liquid chambers 29, 30 are formed between the elastic member 23 and an intermediate portion of the main casing part 21a at opposite positions in a backward and forward direction of the vehicle body. These third and fourth liquid chambers 29, 30 communicate with each other by way of an orifice which is not shown.

The flange part 21b of the casing 21 is secured to a front side frame 11 of the vehicle body frame F by means of a plurality of bolts 31... and a plurality of nuts 32..., and a support plate 33 which is fixed to the inner case 24 is secured to the bracket 10 which is attached to the engine E, by means of a bolt 34 and a nut 35.

In the main mount 6 on the engine side as described above, a damping force for restraining vertical vibrations of the power plant P will be generated, when a liquid passes through the orifice 26a in such a manner that capacities of the first and second liquid chambers 27, 28 may be alternately increased and decreased. Moreover, a damping force for restraining forward and backward vibrations of the power plant P will be generated, when a liquid passes through the orifice which is not shown in such a manner that capacities of the third and fourth liquid chambers 29, 30 may be alternately increased and decreased.

Therefore, by adjusting a size of the orifice 26a, it is possible to set a peak frequency of damping coefficient in a vertical direction.

The main mount 7 on the transmission side is constructed in the same manner as the above described main mount 6 on the engine side, on condition that the peak frequency of the damping coefficient in the vertical direction can be set, and so, detailed description of the same will be omitted.

Referring back to Figs. 1 to 3, the vehicle body frame F is provided with a bracket 37 which is arranged above the right hand front side frame 11, and a torque rod 38 is arranged between this bracket 37 and the bracket 10 which is attached to the cylinder block 8 and the cylinder head 9 of the engine E in the power plant P, substantially horizontally in a plane substantially perpendicular to the axis of the crank shaft 5. This torque rod 38 is provided with elastic members 39, 40 at its opposite ends. A forward end of the torque rod 38 is coupled to the bracket 10 by way of the elastic member 39 so as to rotate around an axis extending in a vertical direction, and a backward end of the torque rod 38 is coupled to the bracket 37 by way of the elastic member 40 so as to rotate around an axis extending in a vertical direction.

The vehicle body frame F is further provided with a cross member 41 interconnecting the two front side frames 11 and 12 in the back of the power plant P, and a torque rod 45 is arranged between a bracket 42 which is provided on this cross member 41 and a bracket 43 which is attached to a crank case 44 of the engine E in the power plant P. This torque rod 45 is provided with elastic members 46, 47 at its opposite ends. A forward end of the torque rod 45 is coupled to the bracket 43 by way of the elastic member 46 so as to rotate around an axis parallel to the crank shaft 5, and a backward end of the torque rod 45 is coupled to the bracket 42 by way of the elastic member 47 so as to rotate around an axis parallel to the crank shaft 5.

One 38 of the torque rods is arranged above drive shafts 48L and 48R which are respectively extended to the left and to the right from the transmission T in the power plant P, while the other torque rod 45 is arranged below the above described drive shafts 48L, 48R.

Fig. 5 is a schematic view of the above described mounting device which is projected on a plane perpendicular to the axis of the crank shaft 5. According to the invention, an oscillation center C of the power plant P following torque variation of the power plant P is determined by an elastic center of the main mounts 6, 7 on the engine side and on the transmission side and by the positions of the drive shafts 48L, 48R. Either one of a pair of the torque rods 38, 45 which are provided between the power plant P and the vehicle body frame F above and below the drive shafts 48L, 48R, namely, the torque rod 45 arranged below the drive shafts 48L, 48R in this embodiment, which is arranged more remote from the oscillation center C is arranged in such a manner that an angle α which is formed by the torque rod 45 with respect to a straight line L which interconnects a connecting point PE of the torque rod 45 on the power plant side and the oscillation center C may be set substantially at a right angle, in a view projected on the above described plane perpendicular to the axis of the crank shaft 5.

Now, operation of this embodiment will be described. At a time of starting or stopping the engine E, and at a time of driving or braking, when the power plant P oscillates around the oscillation center C following the torque variation of the power plant P which is determined by the elastic center defined by the main mounts 6, 7 on the engine side and on the transmission side and by the positions of the drive shafts 48L, 48R, the power plant P is likely to be displaced more significantly at a side of the one torque rod which is arranged more remote from the oscillation center C, namely, the torque rod 45 arranged below the drive shaft 48L, 48R in this embodiment.

However, according to the invention, the angle which is formed between the straight line L which interconnects the connecting point PE of the torque rod 45, one of the pair of the torque rods 38, 45 arranged above and below the drive shafts 48L, 48R, which is arrangedmore remote from the above described oscillation center C, and the above described torque rod 45, in the view projected on the plane perpendicular to the axis of the crank shaft 5 is set substantially at the right angle.

As the results, it is possible to effectively restrain the power plant P from being displaced at the side of the one torque rods 45 thereby to sufficiently restrict the displacement of the power plant P, enabling a mode of displacement to be effectively controlled. Consequently, in the mounting device according to the invention, vibrations in the vertical direction acting on the vehicle body frame F at the time of starting the engine E and at the time of driving, and at the time of stopping the engine E and at the time of braking can be reduced as shown by a solid line in Fig. 6, although such vibrations are increased in the conventional mounting device, as shown by a dotted line in Fig. 6.

Accordingly, the feel of quake and the feel of bump at the time of starting or stopping the engine E will be reduced, and it is possible to contribute to decrease in noises at the time of acceleration or deceleration.

Particularly, in case where the engine E is a diesel engine, the displacement of the power plant caused by a torque repulsive force will be larger, because an oscillation starting power is larger as compared with a gasoline engine, due to its high initial combustion pressure, and a larger torque is generated. However, by constructing the mounting device in a manner according to the invention, the displacement of the power plant P around the oscillation center C canbe sufficiently restricted.

Although the embodiment of the present invention is heretofore described, the invention is not limited to the above described embodiment, but it would be possible to make various modifications in design, without deviating from a gist of the invention which is described in the claim.

As described, according to the invention, it is possible to sufficiently restrain the displacement of the power plant thereby to effectively control the mode of displacement. Therefore, the feel of quake and the feel of bump at the time of starting or stopping the engine can be reduced, and it is possible to contribute to decrease in noises at the time of acceleration or deceleration.

## Claims

1. A mounting device for a vehicular power plant comprising:
a power plant (P) including:
an engine (E), and
a transmission (T) coupled to the engine (E) at one end thereof along an axis of a crankshaft (5) provided in the engine (E),
a main mount (6) on an engine side and a main mount (7) on a transmission side which are arranged substantially on an inertial main axis of the power plant (P) respectively including:
first elastic members (23, 25),
the main mount (6, 7) holding the power plant (P) on a vehicle body frame (F), and a pair of upper and lower torque rods (38, 47) including:
second elastic members (39, 40; 46, 47),
the upper and lower torque rods (38, 45) being provided between the power plant (P) and the vehicle body frame (F) above and below drive shafts (48L, 48R) which are extended from the transmission (T), wherein
an oscillation center (C) of the power plant (P) following torque variation of the power plant (P) is determined at least by a common elastic center of both main mounts (6, 7) on the engine side and on the transmission side and by positions of the drive shafts (48L, 48R), and
an angle (α) which is formed by one torque rod (45) of the two torque rods (38, 45) which is arranged more remote from the oscillation center (C) with respect to a straight line (L) which interconnects a connecting point (PE) of the one torque rod (45) on a power plant side and the oscillation center (C), on a plane perpendicular to the axis of the crankshaft (5) in a projected view is set substantially at a right angle, wherein
the upper torque rod (38) has a substantial vertical axis of rotation and the lower torque rod (45) has an axis of rotation parallel to the crankshaft (5).

## Patentansprüche

1. Lagerungsvorrichtung für eine Fahrzeugantriebsanlage umfassend:
eine Antriebsanlage (P), enthaltend:
eine Maschine (E) und ein Getriebe (T), das mit der Maschine (E) am einen Ende davon längs einer Achse einer in der Maschine (E) vorgesehenen Kurbelwelle (5) gekoppelt ist,
ein Hauptlager (6) an einer Maschinenseite und ein Hauptlager (7) an einer Getriebeseite, die im Wesentlichen auf einer Trägheitshauptachse der Antriebsanlage (P) angeordnet sind, und die jeweils erste elastische Elemente (23, 25) enthalten;
wobei die Hauptlager (6, 7) die Antriebsanlage (P) an einem Fahrzeugkörperrahmen (F) halten,
ein Paar obere und untere Drehmomentstangen (38, 47), die zweite elastische Elemente (39,40; 46,47) enthalten;
wobei die oberen und unteren Drehmomentstangen (38, 45) zwischen der Antriebsanlage (P) und dem Fahrzeugkörperrahmen (F) über und unter Antriebswellen (48L, 48R) vorgesehen sind, die sich von dem Getriebe (T) weg erstrecken, worin
eine einer Drehmomentänderung der Antriebsanlage (P) folgende Schwingungsmitte (C) der Antriebsanlage (P) zumindest durch eine gemeinsame elastische Mitte beider Hauptlager (6, 7) an der Maschinenseite und an der Getriebeseite sowie durch Positionen der Antriebswellen (48L, 48R) bestimmt wird, und
ein Winkel (α), der durch eine Drehmomentstange (45) der zwei Drehmomentstangen (38, 45), die weiter entfernt von der Schwingungsmitte (C) in Bezug auf eine gerade Linie (L) angeordnet ist, die einen Verbindungspunkt (PE) der einen Drehmomentstange (45) an einer Antriebsanlagenseite und die Schwingungsmitte (C) verbindet, auf einer Ebene, die in Projektionsansicht orthogonal zur Achse der Kurbelwelle (5) ist, gebildet ist, im Wesentlichen auf einen rechten Winkel gesetzt ist, worin
die obere Drehmomentstange (38) eine angenähert vertikale Drehachse hat und die untere Drehmomentstange (45) eine zur Kurbelwelle (5) parallele Drehachse hat.

## Revendications

1. Dispositif de montage pour un groupe motopropulseur de véhicule comportant :
un groupe motopropulseur (P) comprenant :
un moteur (E), et
une transmission (T) reliée au moteur (E) au niveau d'une extrémité le long d'un axe d'un vilebrequin (5) prévu dans le moteur (E),
un montage principal (6) sur un côté de moteur et un montage principal (7) sur un côté de transmission qui sont disposés sensiblement sur un axe principal d'inertie du groupe motopropulseur (P) de manière respective comprenant :
des premiers éléments élastiques (23, 25),
le montage principal (6, 7) maintenant le groupe motopropulseur (P) sur une carrosserie de véhicule (F), et une paire de barres de torsion supérieure et inférieure (38, 47) comprenant :
des deuxièmes éléments élastiques (39, 40; 46, 47),
les barres de torsion supérieure et inférieure (38, 45) étant prévues entre le groupe motopropulseur (P) et la carrosserie de véhicule (F) au-dessus et en dessous des arbres de transmission (48L, 48R) qui s'étendent depuis la transmission (T),
un centre d'oscillation (C) du groupe motopropulseur (P) qui suit une variation de couple du groupe motopropulseur (P) étant déterminé au moins par un centre élastique commun des deux montages principaux (6, 7) sur le côté de moteur et sur le côté de transmission et par des positions des arbres de transmission (48L, 48R), et
un angle (α) qui est formé par une barre de torsion (45) des deux barres de torsion (38, 45) qui est disposée plus loin du centre d'oscillation (C) par rapport à une ligne droite (L) qui relie un point de raccordement (PE) de la première barre de torsion (45) sur un côté de groupe motopropulseur et le centre d'oscillation (C), sur un plan perpendiculaire à l'axe du vilebrequin (5) dans une vue projetée, étant établi sensiblement à angle droit,
la barre de torsion supérieure (38) ayant un axe de rotation sensiblement vertical et la barre de torsion inférieure (45) ayant un axe de rotation parallèle au vilebrequin (5).
